**Europäisches Patentamt**

**European Patent Office**

**Office européen des brevets**

(11) Numéro de publication: **0 368 862 B1**

(12) **FASCICULE DE BREVET EUROPEEN**

(45) Date de publication de fascicule du brevet: **19.11.92**  (51) Int. Cl.⁵: **A23J 1/20**

(21) Numéro de dépôt: **88903858.4**

(22) Date de dépôt: **20.04.88**

(86) Numéro de dépôt internationale :
**PCT/FR88/00192**

(87) Numéro de publication internationale :
**WO 89/10064 (02.11.89 89/26)**

(54) **PROCEDE DE SEPARATION DE CERTAINES PROTEINES DU LACTOSERUM OU DU LAIT.**

(43) Date de publication de la demande:
**23.05.90 Bulletin 90/21**

(45) Mention de la délivrance du brevet:
**19.11.92 Bulletin 92/47**

(84) Etats contractants désignés:
**AT BE CH DE FR GB IT LI LU NL SE**

(56) Documents cités:
**FR-A- 2 204 948**
**FR-A- 2 452 881**
**FR-A- 2 605 322**

(73) Titulaire: **APPLICATIONS TECHNIOUES NOU-VELLES**
**13, rue des Filmins**
**F-92330 Sceaux(FR)**

(72) Inventeur: **DUBOIS, Ernest**
**13, rue des Filmins**
**F-92330 Sceaux(FR)**

(74) Mandataire: **de Boisse, Louis Arnaud**
**CABINET de BOISSE 37, Avenue Franklin D. Roosevelt**
**F-75008 Paris(FR)**

Rank Xerox (UK) Business Services

**Description**

L'invention concerne un procédé de préparation et de fractionnement des protéines de masse molaire élevée contenues dans un liquide chargé de ce type de protéines.

Le lactosérum est un sous-produit de l'industrie fromagère, autrefois rejeté, que l'on cherche depuis quelques années à valoriser en extrayant de celui-ci certaines matières utiles. Typiquement, le lactosérum contient environ 40-80g de matières sèches par litre, ces matières sèches étant formées de lactose, de matières minerales, et, de matières azotées dont 65% en poids environ sont formées de protéines. Ces protéines sont formées à leur tour, en poids, d'environ 80% d'albumines, 10% d'immunoglobulines et 10% de protéines diverses telles que la lactoferrine (2% environ) et la lactoperoxydase, et présentent un grand intérêt dans divers domaines (nutrition, préparation de laits maternisés, etc...). On connaît déjà divers procédés visant à récupérer les protéines du lactosérum ou autre dérivé du lait.

Ainsi, FR-A-2 204 948 décrit un procédé d'obtention de concentré de protéines solubles dans l'eau, par exemple en ultra-filtrant du petit-lait, puis en le concentrant par passage sur un gel chromatographique. Ce procédé antérieur est un procédé global qui ne permet pas de séparer les différents types de protéines contrairement au procédé de l'invention.

B.N. Mathur et coll. dans le Journal of Dairy Science vol. 62, N° 1, Janvier 1979, pages 95-105, évoquent la possibilité de fractionner les protéines d'un concentré de protéines par filtration sur gel, mais sans en divulguer véritablement les modalités techniques. Si, par ailleurs, cet article mentionne l'ultrafiltration comme l'une des techniques permettant de préparer le concentré de protéines, il ne suggère nullement, de conduire l'ultrafiltration à un taux de concentration élevé, égal ou supérieur à 40 et avec une membrane dont le seuil de coupure approche celui préconisé par la présente invention.

FR-A-2 103 265 décrit un procédé de production d'un concentré de protéines à partir de petit-lait au moyen d'étapes d'ultrafiltration successives, eventuellement suivies d'une étape de filtration sur gel. Ce procédé est aussi une procédé global qui ne vise pas à fractionner les différents types de protéines, contrairement au procédé de l'invention.

FR-A-2 452 881 a trait à un procédé de séparation et de fractionnement de protéines animales ou végétales par traitement de sources de telles protéines, telles que, par exemple, le lactosérum ou le lait, par des techniques de chromatographie d'exclusion et d'échange d'ions, la source de départ pouvant être prétraitée par diverses techniques incluant, entre autres, l'ultrafiltration. Le procédé implique l'emploi de plusieurs types de résines à propriétés spécifiques. Aucune fonction de fractionnement n'est impartie à l'étape d'ultrafiltration qui sert uniquement à concentrer la source de départ.

FR-A-2 487 642, qui est une addition au précédent, vise un procédé du genre de celui de FR-A-2 452 881 dans laquelle la matière est soumise à une ultrafiltration sur membrane avant ou après le passage sur les résines. Les facteurs de concentration mis en jeu sont de l'ordre de 5 seulement. Comme pour FR-A-2 452 881 l'ultrafiltration n'est pas employée pour séparer les protéines de masse molaire élevée (supérieure à 50 000 daltons) des protéines de plus basse masse molaire, des peptides et des acides aminés.

Aucun des documents antérieurs précités ne décrit donc un procédé permettant de séparer sélectivement les protéines de masse molaire élevée d'un liquide les contenant.

Il existe donc un besoin pour un procédé permettant une telle séparation sélective.

L'invention vise à fournir un tel procédé.

Plus particulièrement, l'invention concerne un procédé de séparation et de fractionnement des protéines de masse molaire élevée contenues dans un liquide chargé de ce type de protéines, comme indiqué dans la revendication 1.

De préférence, l'ultrafiltration est poursuivie jusqu'a obtention d'un facteur de concentration d'au moins 100.

L'invention est particulièrement adaptée au cas où le liquide chargé de protéines est du lactosérum décaséiné, préconcentré ou non, déminéralisé ou non, mais peut également être appliquée à d'autres liquides chargés de protéines de masse molaine élevée, par exemple du lait démicellé et décaséiné, préconcentré ou non, déminéralisé ou non, ou du lactoserum délipidé reconstitué par solubilisation à partir d'un lactosérum à l'état solide par des procédés classiques. On pourrait également traiter des substances d'origine végétale (jus de fruits par exemple) ou animale (colostrum par exemple), telles qu'obtenues ou après un prétraitement de celles-ci.

Les protéines contenues dans le lactosérum ou autre produit laitier, se différencient par leur masse molaire. On distingue ainsi :

- <u>la fraction des albumines</u>

$\alpha$- lactalbumine                 14000 daltons* environ

$\beta$- lactoglobuline               18000 daltons environ

- <u>la fraction des immunoglobulines</u> 180000 daltons environ

- <u>la fraction de la lactoferrine et de la lactoperoxydase</u>          80000 daltons environ.

* Le dalton est l'unité utilisée pour définir la masse molaire d'une molécule. 1 dalton est égal à 1/16 de la masse d'un atome d'oxygène.

L'étape (a) d'ultrafiltration du procédé de l'invention a pour but de séparer du mieux possible le lactose et les albumines des fractions immunoglobulines et lactoferrine + lactoperoxydase. La séparation n'est toutefois pas efficace à 100% car une fraction des protéines de masse molaire élevée traverse la membrane et une fraction des protéines de masse molaire peu élevée est quand même retenue par la membrane. Le taux de rétention d'une protéine définit sa propension à être retenue par une membrane donnée dans des conditions données. Ce taux n'est jamais en pratique, égal à 100%.

A cette fin, l'ultrafiltration (a) est effectuée avec une membrane semi-perméable ayant un seuil de coupure d'au moins 40000 daltons, c'est-à-dire retenant préférentiellement les molécules de masse molaire supérieure à 40000 daltons.

Avantageusement, la membrane utilisée aura un seuil de coupure entre 40000 et 80000 daltons environ. La membrane utilisée peut être de nature organique ou minérale. Avantageusement, l'ultrafiltration (a) est conduite en au moins deux stades. Un premier stade est effectué avec une première membrane jusqu'à un taux de concentration de 5 à 10 par exemple, et un deuxième stade est opéré sur le rétentat obtenu dans le premier stade avec une deuxième membrane jusqu'à obtention du taux de concentration final désiré. Les première et deuxième membranes peuvent être de nature identique ou différente. Diverses membranes pouvant être employées pour réaliser l'ultrafiltration (a) sont disponibles dans le commerce. On peut citer, à titre d'exemples non limitatifs, les membranes organiques commercialisées sous les marques AMICON (Groupe GRACE) et PLEIADE (Groupe RHONE-POULENC) ou les membranes minérales commercialisées sous la marque CARBOSEP par la Société TECH-SEP (Groupe RHONE-POULENC).

Le liquide, tel que le lactosérum, soumis à l'ultrafiltration (a) doit présenter un pH compris dans la gamme de 5 a 8,5 environ, de préférence de 7 a 8,5, et une force ionique comprise entre 0,2 et 1 molaire environ. La force ionique requise peut être obtenue en ajoutant un sel convenablement choisi, tel que le chlorure de sodium, au liquide à traiter. Pour éviter une saveur trop salée, on règlera de préférence la force ionique entre 0,2 et 0,5 molaire. Ces conditions se sont révélées nécessaires pour éviter un phénomène de polarisation important pouvant modifier le seuil de coupure de la membrane.

L'ultrafiltration (a) produit un perméat (formé principalement d'eau, de lactose et des albumines) et un rétentat (formé principalement d'eau, des immunoglobulines, de la lactoferrine et de la lactoperoxydase). L'ultrafiltration (a) doit être conduite dans des conditions amenant un facteur de concentration final (rapport de liquide initial/volume de rétentat) d'au moins 40 et pouvant atteindre 100 et plus. La seule limite imposée au facteur de concentration est que la concentration de protéines dissoutes dans le rétentat ne devienne pas si élevée qu'elle provoque la gélification du rétentat. Habituellement, la concentration limite des protéines est de l'ordre de 200-250 g/litre. Un facteur de concentration de 40 et plus représente un facteur de concentration inhabituel. Habituellement, dans les procédés antérieurs mettant en jeu une ultrafiltration, on utilise des facteurs de concentration inférieurs à 10, typiquement de 5 ou 6. Le facteur de concentration élevé utilisé dans le présent procédé offre plusieurs avantages :

- il permet d'obtenir un rétentat, concentré en immunoglobulines, lactoferrine et lactoperoxydase, ce qui permet d'utiliser une installation de chromatographie compacte, donc économique, pour effectuer ensuite l'étape (b),

- il permet d'obtenir un enrichissement relatif important du rétentat en les protéines ayant les taux de rétention par la membrane les plus élevés.

L'étape de fractionnement sélectif sur gel chromatographique du rétentat provenant de l'ultrafiltration (a) peut être conduite en faisant passer le rétentat sur une colonne garnie d'un support chromatographique approprié à l'aide d'un agent d'élution. Ce fractionnement est basé sur les capacités différentes des molécules des diverses protéines contenues dans le rétentat à pénètrer dans les pores du support stationnaire. Les très grosses molécules ne pénètrent pas dans le support et traversent donc plus rapidement le support chromatographique. Les plus petites molécules pénètrent par contre dans le support chromatographique et sont éluées plus lentement.

Pour la séparation, d'une part, de la fraction immunoglobulines et, d'autre part, de la fraction lactoferrine + lactoperoxydase, on peut utiliser un support chromatographique (souvent appelé gel chromatographique) se présentant sous la forme de billes et dont le domaine de fonctionnement correspond au moins à la gamme de masses molaires des protéines à séparer, par exemple de 5000 à 250000 daltons. Un tel support séparera le rétentat en ses constituants, suivant leur masse molaire, en deux fractions ou plus. Le support utilisé sera préalablement équilibré par un tampon de force ionique élevée afin de limiter les associations protéines-protéines, notamment pour éviter la polymérisation éventuelle des bêta-lactoglobulines résiduelles.

Divers supports chromatographiques utilisables sont disponibles dans le commerce. A titre d'exemples non limitatifs on peut citer, par exemple, le SEPHADEX G 150 (dextrane réticulé) et le SEPHACRYL S200 (dextrane allylique réticulé par du N,N'-méthylène bis-acrylamide).

Comme agents d'élution, on peut utiliser, par exemple, du TRIS (tris(hydroxyméthyl)amino méthane), du tampon phosphate (mélange de phosphates mono- et di-sodiques), etc... D'autres supports chromatographiques et d'autres agents d'élution utilisables seront évidents pour l'homme du métier. L'agent d'élution doit avoir un pH du même ordre que celui du liquide à traiter.

A titre indicatif, on peut traiter à chaque cycle de fractionnement chromatographique un volume d'échantillon allant de 5 à 15% environ du volume du support chromatographique contenu dans la colonne et des débits d'élution allant de 0,5 a 1 fois environ le volume dudit support par heure. Ces conditions n'ont toutefois rien de critique et il est parfaitement à la portée de l'homme du métier de déterminer des conditions appropriées.

La technique chromatographique exposée ci-dessus est également communément appelée filtration sur gel. Il y a lieu de noter, cependant, que l'invention n'est pas limitée a l'emploi de cette technique particulière. On pourrait, par exemple, avoir recours à une technique chromatographique utilisant des résines échangeuses d'ions, à une technique de chromatographie liquide haute pression, etc...

La description qui va suivre, faite en se référant au dessin annexé, fera bien comprendre l'invention.

Sur le dessin :

La figure 1 est une représentation schématique d'une installation d'ultrafiltration ;

La figure 2 est un représentation schématique d'une installation de fractionnement sur support chromatographique ; et

La figure 3 représente un diagramme d'élution typique.

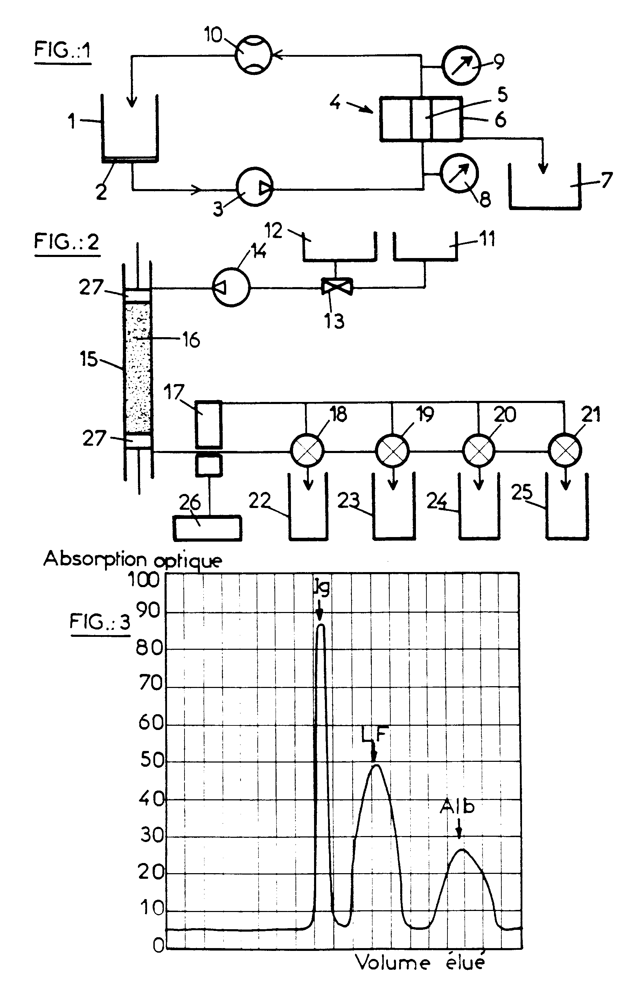

Sur la figure 1, du lactosérum décaséiné est stocké dans un réservoir 1 muni à sa partie inférieure d'un filtre 2 en verre fritté, retenant les particules solides éventuellement présentes dans le lactosérum, et alimente une pompe péristaltique 3 de circulation qui envoie le lactosérum dans un module 4 d'ultrafiltration comprenant une membrane 5, logée dans un carter 6. Le perméat qui traverse la membrane se retrouve dans le carter et est envoyé dans le réservoir 7 de perméat. Le rétentat qui est retenu par la membrane s'appauvrit progressivement en les constituants du perméat (principalement le lactose et les albumines) et est renvoyé dans le réservoir 1 d'où il peut être recyclé au module 4 autant de fois que nécessaire. Des manomètres 8 et 9 et un débitmètre 10 permettent de connaître les caractéristiques de l'écoulement du rétentat. Ou arrête l'opération lorsque le facteur de concentration intermédiaire désiré est atteint (typiquement 5 à 10).

A l'aide de l'installation de la figure 1, on a traité un lactosérum fourni par un fabricant de fromage dont les caractéristiques étaient approximativement les suivantes :

| - azote total : | 1,21 g/l |
|---|---|
| - azote soluble | 1,18 g/l |
| - pH | 7,5 |

Ce lactosérum contenait environ 7,5 g/l de protéines solubles dont :

EP 0 368 862 B1

| - albumines : | 6 g/l |
|---|---|
| - fractions immunoglobulines | 0,8 g/l |
| - fraction lactoferrine + lactoperoxydase | 0,12 g/l |

Dans un premier stade d'ultrafiltration, on a utilisé, comme membrane 5, une membrane poreuse minérale CARBOSEP, type M1 (seuil de coupure 60-80000 daltons) et on a poursuivi ce stade jusqu'à obtention d'un facteur de concentration de 5,56. Le débit du perméat était stable et se maintenait à 85 litres/heure/m$^2$ de surface de membrane.

Plus de 90% de la lactoferrine présente dans le lactosérum de départ se retrouvent dans le rétentat obtenu.

Dans une deuxième étape d'ultrafiltration, on a utilisé comme membrane 5, un faisceau de fines fibres poreuses parallèles AMICON, type HIP 100-20 (seuil de coupure de 50000) constituées d'un polymère cellulosique de structure anisotrope et on a traité le rétentat obtenu dans le premier stade jusqu'à obtention d'un facteur de concentration volumique de 22, soit un facteur de concentration global de 22 x 5,56 = 121. Les teneurs en lactoferrine et en protéines solubles du lactosérum de départ, du rétentat intermédiaire et du rétentat final sont les suivantes :

| | lactosérum initial | rétentat intermédiaire | rétentat final |
|---|---|---|---|
| Facteur de concentration | 1 | 5,56 | 121 |
| Lactoferrine*, g/l | 0,11 | 0,56 | 7,5 |
| Protéines solubles g/l | 7,5 | 21,9 | 230 |

*Les teneurs en lactoferrine indiquées ont été déterminées par immuno-diffusion radiale. La précision estimée est de l'ordre de ± 15%. Les teneurs en protéines solubles ont été déduites du dosage de l'azote par la méthode de Kjeldahl.

Comme dans le premier stade, on a constaté une stabilité du débit du perméat a 85 l/h/m$^2$. Il est à noter que les stades d'ultrafiltration sont effectués de préférence sur une plage de température de 30 à 50°C pour maintenir le liquide traité a une viscosité appropriée. Si désiré, un échangeur de chaleur peut être prévu avant l'entrée du module d'ultrafiltration pour maintenir la température à une valeur appropriée.

Sur la figure 2, on a représenté une installation de fractionnement chromatographique du rétentat final produit par l'ultrafiltration. Cette installation comprend un réservoir 11 du rétentat a traiter et un réservoir 12 d'éluant reliés à une vanne a trois voies 13. Une pompe péristaltique 14 permet d'alimenter à volonté une colonne chromatographique 15 en rétentat ou en éluant selon le réglage de la vanne 13. La colonne 15 est garnie d'un support ou gel chromatographique 16. A la sortie de la colonne 15, un détecteur optique 17 opérant à 280 nanomètres commandant des vannes 18, 19, 20 et 21 permet de diriger sélectivement les fractions correspondant à chacun des pics séparés par chromatographie ainsi que le reste d'éluant vers des cuves 22, 23, 24 et 25 respectivement. Le détecteur 17 est associé a un enregistreur 26. La colonne 15 avait un diamètre intérieur de 16 mm et était équipée de deux adaptateurs 27 permettant de régler la hauteur du support ou gel chromatographique. Cette hauteur a été réglée à 60 cm. La colonne était garnie d'un gel chromatographique SEPHADEX G 150 capable de séparer des molécules de masse molaire comprises entre 5000 et 300000 daltons. L'éluant utilisé est un tampon TRIS(tris-hydroxyméthyl/amino-méthane) 0,1 M, 1 M NaCl, pH 8 présentant une force ionique élevée limitant les agglomérations protéines-protéines. Le gel chromatographique était préalablement équilibré dans un tampon de force ionique élevé et de pH du même ordre que celui de l'éluant.

On a injecté dans la colonne un volume de rétentat à traiter correspondant a 10% du volume de la colonne, soit environ 12 ml. Le débit d'élution a été réglé, au cours de trois essais, à 30, 40 et 60 cm/heure (60, 80 et 120 ml d'éluant/heure) ce qui correspondait à un cycle total de 120, 90 et 60 mn, respectivement. Dans tous les cas, on a obtenu la séparation de trois fractions, a savoir une fraction albumines résiduelles, une fraction lactoferrine + lactoperoxydase et une fraction immunoglobulines.

La figure 3 représente un diagramme d'élution typique montrant la séparation des pics des diverses fractions.

**Revendications**

**1.** Un procédé de séparation et de fractionnement des protéines contenues dans un liquide contenant un mélange de protéines de masse molaire inférieure à 40000 daltons et de protéines de masse molaire supérieure à 40000 daltons, qui comprend deux étapes :

a) une étape d'ultrafiltration visant à produire un rétentat enrichi en protéines et un perméat contenant le reste dudit liquide, et

b) une étape de fractionnement sélectif du rétentat obtenu en (a) sur un support chromatographique, procédé caractérisé en ce que :

(i) l'ultrafiltration est effectuée avec une membrane poreuse ayant un seuil de coupure d'au moins 40000 daltons mais non supérieur à la masse molaire en daltons desdites protéines ayant une messe molaire supérieure à 40000 daltons,

(ii) le liquide chargé de protéines à traiter par ultrafiltration présente un pH de 5 à 8,5 et une force ionique de 0,2 à 1 molaire, et

(iii) l'ultrafiltration (a) est poursuivie jusqu'à obtention d'un facteur de concentration d'au moins 40, de façon à produire un rétentat enrichi en protéines de masse molaire supérieure à 40000 daltons et appauvri en protéines de masse molaire inférieure à 40000 daltons.

**2.** Un procédé selon la revendication 1, caractérisé en ce que l'ultrafiltration est poursuivie jusqu'à obtention d'un facteur de concentration d'au moins 100.

**3.** Un procédé selon la revendication 1 ou 2, caractérisé en ce que le liquide chargé de protéines a un pH de 7 à 8,5.

**4.** Un procédé selon la revendication 1, 2 ou 3, caractérisé en ce que le liquide chargé de protéines est du lactosérum.

**5.** Un procédé selon la revendication 4, caractérisé en ce que le lactosérum est préalablement concentré.

**6.** Un procédé selon la revendication 4 ou 5, caractérisé en ce que le lactosérum est préalablement décaséiné.

**7.** Un procédé selon la revendication 3, 4, 5 ou 6, caractérisé en ce que le lactosérum n'est pas déminéralisé.

**8.** Un procédé selon la revendication 1, 2 ou 3, caractérisé en ce que le liquide chargé de protéines est un lactosérum délipidé reconstitué par solubilisation, a partir d'un lactosérum mis à l'état solide par des procédés classiques.

**9.** Un procédé selon l'une quelconque des revendications 1 a 8, caractérisé en ce que l'étape d'ultrafiltration est conduite en au moins deux stades.

## Claims

**1.** A process for separating and fractionating the proteins contained in a liquid comprising a blend of proteins having a molar mass lower than 40,000 daltons and of proteins having a molar mass higher than 40,000 daltons, which comprises two steps:

a) an ultrafiltration step directed towards producing a retentate enriched in proteins and a permeate containing the remainder of said liquid, and

b) a step of selective fractionation of the retentate obtained in (a) on a chromatographic support, process

characterized in that :

(i) the ultrafiltration is performed with a porous membrane having a cut-off threshold of at least 40,000 daltons, but not higher than the molar mass in daltons of said proteins having a molar mass higher than 40,000 daltons,

(ii) the protein-containing liquid to be treated by ultrafiltration has a pH of 5 to 8.5 and an ionic strength of 0.2 to 1 molar, and

(iii) the ultrafiltration (a) is continued until a concentration factor of at least 40 is obtained, whereby a retentate enriched in proteins having a molar mass higher than 40,000 daltons and depleted in proteins having a molar mass lower than 40,000 daltons is produced.

EP 0 368 862 B1

**2.** A process as claimed in claim 1, characterized in that the ultrafiltration is continued until a concentration factor of at least 100 is obtained.

**3.** A process as claimed 1 or 2, characterized in that the protein-containing liquid has a pH of 7 to 8.5.

**4.** A process as claimed in claim 1, 2 or 3, characterised in that the protein-containing liquid is whey.

**5.** A process as claimed in claim 4, characterized in that the whey is concentrated beforehand.

**6.** A process as claimed in claim 4 or 5, characterized in that the whey is decaseinated beforehand.

**7.** A process as claimed in claim 3, 4, 5 or 6, characterized in that the whey is not demineralized.

**8.** A process as claimed in claim 1, 2 or 3, characterised in that the protein-containing liquid is a delipidized whey reconstituted by solubilization from a whey converted to the solid state by conventional processes.

**9.** A process according to claims 1 to 8, characterized in that the ultrafiltration step is carried out in at least two stages.

## Patentansprüche

**1.** Verfahren zum Abtrennen und Fraktionieren von Proteinen in einer Flüssigkeit, die ein Gemisch aus Proteinen einer molaren Masse von weniger als 40.000 Dalton und Proteinen einer molaren Masse von mehr als 40.000 Dalton enthält, welches Verfahren zwei Vorgänge aufweist:

a) einen Ultrafiltrationsvorgang zum Erseugen eines mit Proteinen angereicherten Retentates und eines den Rest der Flüssigkeit enthaltenden Permeates, und

b) einen Vorgang zur selektiven Fraktionierung des bei (a) erhaltenen Retentates auf einem chromatografischen Träger,

wobei das Verfahren dadurch gekennzeichnet ist, daß

(i) die Ultrafiltration durchgeführt wird mit einer porösen Membran einer Trennschwelle von mindestens 40.000 Dalton, jedoch nicht mehr als der molaren Masse in Dalton der Proteine, die eine molare Masse von mehr als 40.000 Dalton haben,

(ii) die durch Ultrafiltration zu behandelnde proteinhaltige Flüssigkeit einen PH-Wert von 5 bis 8,5 und eine molare Ionenkraft von 0,2 bis 1 aufweist und

(iii) die Ultrafiltration (a) bis zum Erreichen eines Konzentrationsfaktors von mindestens 40 durchgeführt wird, derart, daß ein Retentat erzeugt wird, das mit Proteinen einer molaren Masse von mehr als 40.000 Dalton angereichert ist und bezüglich Proteinen einer molaren Masse von weniger als 40.000 Dalton abgemagert ist.

**2.** Verfahren nach Anspruch 1, dadurch gekennzeichnet, daß die Ultrafiltration bis zum Erreichen eines Konzentrationsfaktors von mindestens 100 durchgeführt wird.

**3.** Verfahren nach Anspruch 1 oder 2, dadurch gekennzeichnet, daß die proteinhaltige Flüssigkeit einen PH-Wert von 7 bis 8,5 hat.

**4.** Verfahren nach Anspruch 1,2 oder 3, dadurch gekennzeichnet, daß die proteinhaltige Flüssigkeit Molke ist.

**5.** Verfahren nach Anspruch 4, dadurch gekennzeichnet, daß die Molke vorher konzentriert wurde.

**6.** Verfahren nach Anspruch 4 oder 5, dadurch gekennzeichnet, daß die Molke vorher entkaseiniert wurde.

**7.** Verfahren nach Anspruch 3, 4, 5 oder 6, dadurch gekennzeichnet, daß die Molke nicht entmineralisiert wurde.

**8.** Verfahren nach Anspruch 1, 2 oder 3, dadurch gekennzeichnet, daß die proteinhaltige Flüssigkeit eine entlipidisierte Molke ist, die durch Solubilisieren einer Molke rekonstituiert wurde, welche mittels

7

herkömmlicher Verfahren in den festen Zustand überführt worden war.

9. Verfahren nach einem der Ansprüche 1 bis 8, dadurch gekennzeichnet, daß der Ultrafiltrationsvorgang in mindestens zwei Stufen durchgeführt wird.

FIG.:1

FIG.:2

Absorption optique

FIG.:3

Volume élué